# EUROPEAN PATENT APPLICATION

(11) **EP 4 624 272 A1**
(43) Date of publication of application: **01.10.2025**
(21) Application number: 25153929.2
(22) Date of filing: 24.01.2025
(51) Int. Cl.: B60R 19/48, B60R 13/10

(54) **VEHICLE STRUCTURE**

(30) Priority: 29.03.2024 JP 2024056501
(71) Applicant: Suzuki Motor Corporation, Shizuoka 432-8611 (JP)
(72) Inventor: UCHIDA, Hiroki, HAMAMATSU-SHI, 432-8611 (JP)
(74) Representative: Plasseraud IP

(57) **Abstract**

[Problem to be Solved] To provide a vehicle structure capable of reducing displacement of a sensor device provided on a vehicle inner side of an exterior member to maintain desired detection accuracy.

[Solution] A vehicle structure 1 includes an exterior member 2 forming a design surface on a vehicle outer side, and a sensor supporting member 3 provided on a vehicle inner side of the exterior member 2 and supporting a sensor device S that senses a vehicle external environment. The exterior member 2 includes a plate supporting part 21 supporting a license plate P of the vehicle, and the sensor supporting member 3 is coupled to the plate supporting part 21 of the exterior member 2.

## Description

### [Technical Field]

The present invention relates to a vehicle structure including a structure for arranging, in an exterior member, a sensor device that senses a vehicle external environment.

### [Background Art]

In general, vehicles such as automobiles are provided with exterior members such as a bumper and a grille, which constitute a design surface on a vehicle outer side, in front and rear parts thereof. A sensor device that senses a vehicle exterior environment may be provided on a back surface or the like of the exterior member. Examples of the sensor device include a radar that uses radio waves such as millimeter waves and microwaves as sensing waves, LiDAR (light detection and ranging) that uses laser light as sensing waves, a sound wave sensor (ultrasonic sensor/sonar) that uses sound waves such as ultrasonic waves as sensing waves, and a camera (imaging device) that senses the vehicle external environment by imaging. A region of the exterior member opposing the sensor device is formed as a sensing wave transmission part made of a material through which sensing waves can be transmitted, and functions as a sensor cover. Then, to increase sensing accuracy, high accuracy is required for a relative positional relationship (relative distance and relative angle) between the sensing wave transmission part (sensor cover) of the exterior member and the sensor device.

As an example of a conventional vehicle structure including a structure for arranging a sensor device on an exterior member, Patent Literature 1 discloses a structure in which a radar antenna is fixed to a frame material that reinforces a panel material of a front grille. Such a structure facilitates adjustment of the relative positional relationship between the panel material functioning as a sensing wave transmission part (sensor cover) and the radar antenna.

### [Citation List]

### [Patent Literature]

[Patent Literature 1] JP 2021-059268 A

### [Summary of Invention]

### [Problems to be Solved by the Invention]

Incidentally, when an exterior member (panel material) includes a ventilation part through which air flows in a vehicle interior-exterior direction, as in a front grill disclosed in Patent Literature 1, it is necessary to provide the ventilation part also on a side of a sensor supporting member (frame material) that supports a sensor device (radar antenna) or to design arrangement or shape of the sensor supporting member for avoiding the ventilation part of the exterior member. In this case, depending on the shape or material of the sensor supporting member, there is a possibility that rigidity of a supporting part around the sensor device cannot be sufficiently secured. If the rigidity of the supporting part is insufficient, the sensor device may undergo a change in position due to vibration, wind pressure, external force of light collision, or the like during vehicle running, and there is concern of lowering detection accuracy of the sensor device. In particular, such a problem is likely to occur when the ventilation part having a large opening area is provided in the exterior member, and there has been room for improvement in that displacement of the sensor device is reduced to maintain desired detection accuracy.

An object of the present invention, which has been made in view of the above respects, is to provide a vehicle structure capable of reducing displacement of a sensor device provided on a vehicle inner side of an exterior member to maintain desired detection accuracy.

### [Means for Solving the Problems]

To achieve the above object, one aspect of the present invention provides a vehicle structure including an exterior member forming a design surface on a vehicle outer side, and a sensor supporting member provided on a vehicle inner side of the exterior member and supporting a sensor device that senses vehicle external environment. In this vehicle structure, the exterior member includes a plate supporting part supporting a license plate of the vehicle, and the sensor supporting member is coupled to the plate supporting part.

### [Advantageous Effect of Invention]

According to a vehicle structure of the present invention, displacement of a sensor device provided on a vehicle inner side of an exterior member can be reduced to maintain desired detection accuracy.

### [Brief Description of Drawings]

[Figure 1] Figure 1 is a perspective view of a vehicle structure according to one embodiment of the present invention viewed from a front oblique side.
[Figure 2] Figure 2 is a perspective view showing a state in which an exterior member and a grille supporting member are removed in Figure 1.
[Figure 3] Figure 3 is a front view of a main part of the vehicle structure of Figure 1 viewed from front.
[Figure 4] Figure 4 is a back view of the main part of the vehicle structure of Figure 1 viewed from rear.
[Figure 5] Figure 5 is a back view showing a state in which an air guide member is removed in Figure 4.
[Figure 6] Figure 6 is an enlarged perspective view around a plate supporting part viewed from front and obliquely downward.
[Figure 7] Figure 7 is an enlarged perspective view around the plate supporting part viewed from rear and obliquely upward.
[Figure 8] Figure 8 is a view illustrating an example of a method of fixing a license plate.
[Figure 9] Figure 9 is a perspective view of a sensor supporting member viewed from front oblique side.
[Figure 10] Figure 10 is a perspective view of the sensor supporting member viewed from rear oblique side.

### [Mode for Carrying Out the Invention]

Hereinafter, an embodiment of the present invention will be described in detail with reference to the accompanying drawings.

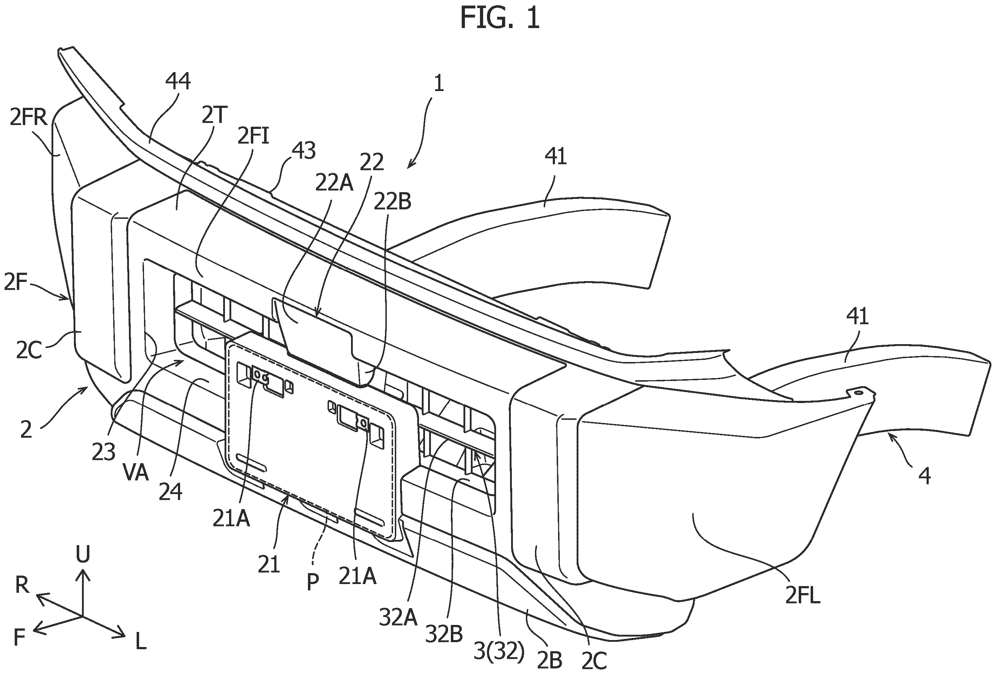

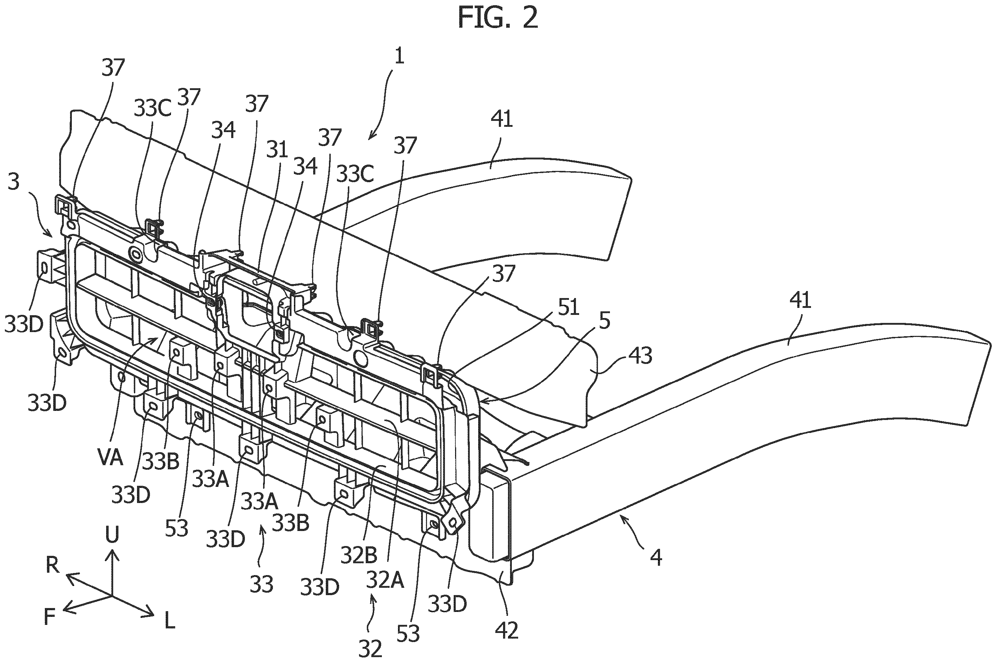

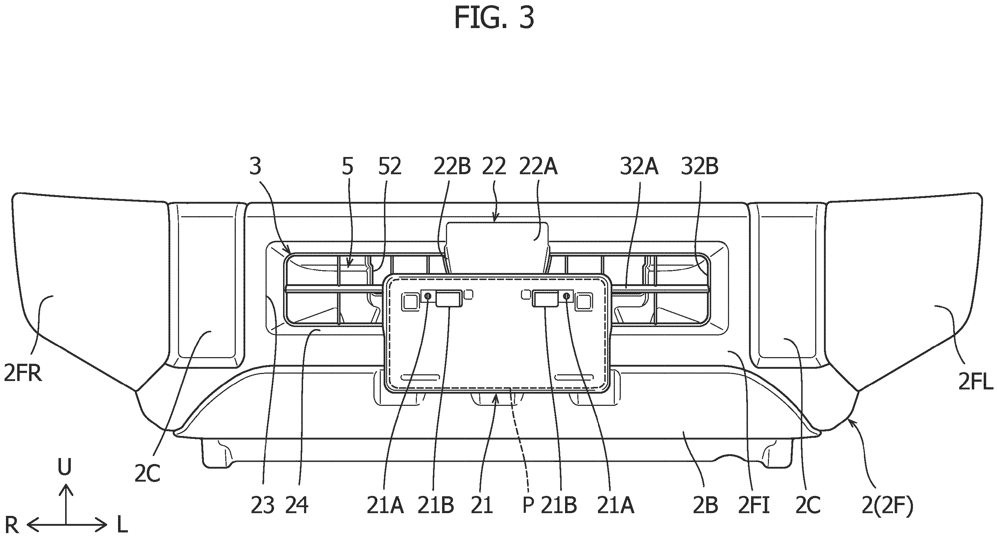

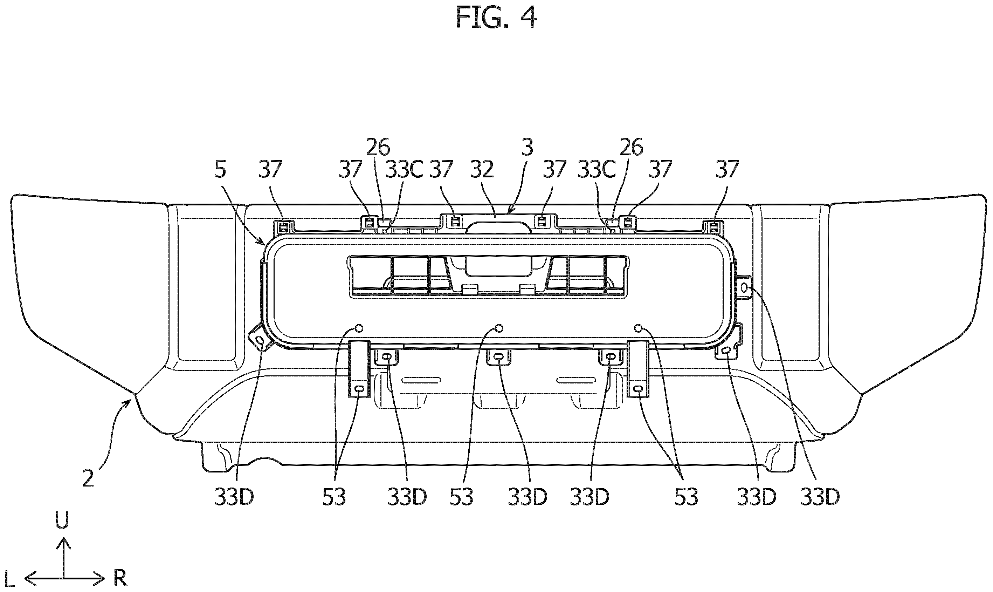

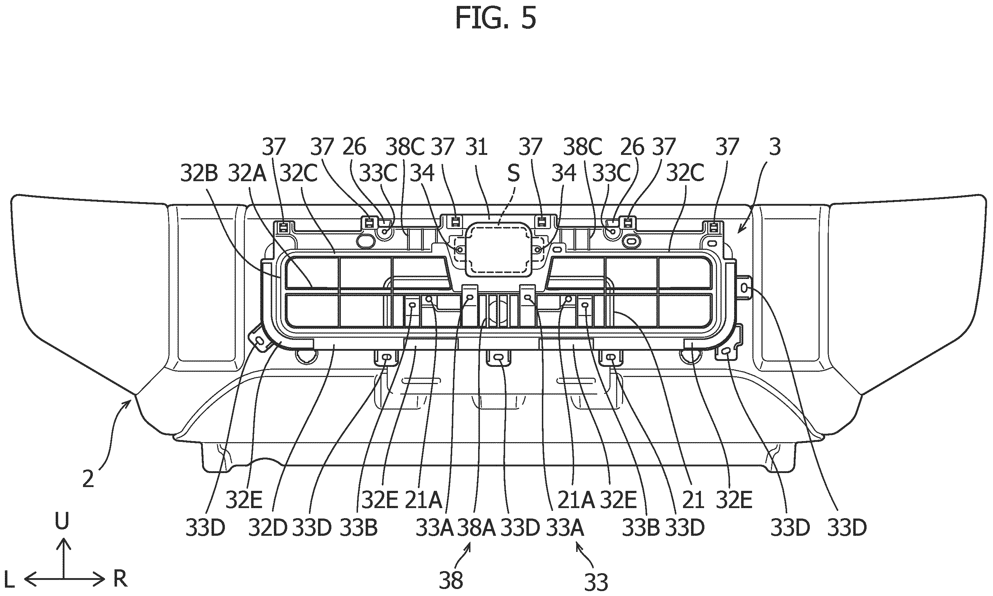

Figures 1 to 5 are views for describing a vehicle structure 1 according to one embodiment of the present invention. Figure 1 is a perspective view of the vehicle structure 1 viewed from a front oblique side, and Figure 2 is a perspective view showing a state in which an exterior member 2 and a bottom frame part 44 of a grille supporting member are removed in Figure 1. Additionally, Figure 3 is a front view of the vehicle structure 1 viewed from front, Figure 4 is a back view of the vehicle structure 1 viewed from rear, and Figure 5 is a back view showing a state in which an air guide member 5 is removed in Figure 4. In each of the drawings described below, an arrow F direction indicates forward in a vehicle front-rear direction, an arrow U direction indicates upward in a vehicle up-down direction, and an arrow R direction and arrow L direction indicate right and left when viewing a vehicle front from a vehicle interior.

In Figures 1 to 5, the vehicle structure 1 of the present embodiment includes, for example, an exterior member 2 provided in a front part of a vehicle such as an automobile and forming a design surface on a vehicle outer side, and a sensor supporting member 3 provided on a vehicle inner side of the exterior member 2 and supporting a sensor device S that senses vehicle external environment. The sensor device S (dashed line in Figure 5) in the present embodiment is, for example, a radar (millimeter wave radar) that uses a millimeter wave as a sensing wave. However, the sensor device S is not limited to the millimeter wave radar, and examples of the device may include various radars that use radio waves other than millimeter waves (such as microwaves) as sensing waves, LiDAR that uses laser light as sensing waves, a sound wave sensor (ultrasonic sensor/sonar) that uses sound waves such as ultrasonic waves as sensing waves, and a camera (imaging device) that senses the vehicle exterior environment by imaging.

The exterior member 2 is, for example, a front bumper disposed in a bottom part of a front surface of the vehicle and extending in a vehicle width direction. However, the exterior member 2 is not limited to the front bumper and may be a front grill provided in the vehicle front part, or a rear bumper or rear grille disposed in a vehicle rear part. The exterior member 2 (front bumper) in the present embodiment is supported on a highly rigid vehicle body structure member 4 constituting a frame of the vehicle (Figure 1). In the vehicle front part, as components constituting a part of the vehicle body structure member 4, a pair of left and right front side members 41, a lower cross member 42, an upper cross member 43 and other members are provided (Figure 2).

The left and right front side members 41 extend in a front-rear direction in a vehicle bottom part and are arranged at an interval in the vehicle width direction. The lower cross member 42 extends in the vehicle width direction and has opposite end portions in the vehicle width direction that are joined to front end portions of the left and right front side members 41, respectively. The upper cross member 43 is disposed at an interval above the lower cross member 42 and extends in the vehicle width direction.

To the lower cross member 42, a bottom part of the exterior member 2 is fixed (Figures 1 and 2). That is, the exterior member 2 is supported on the highly rigid lower cross member 42 constituting a part of the vehicle body structure member 4. To the upper cross member 43, the bottom frame part 44 of the grille supporting member supporting the front grille (not shown) is fixed (Figure 1). The front grille is disposed between a left headlight and a right headlight (not shown), extends in the vehicle width direction, and is a resin member (an exterior member separate from the front bumper) in which a plurality of ventilation holes is formed. Below the bottom frame part 44 of the grille supporting member, a top surface part 2T in the exterior member 2 (front bumper) is disposed adjacent to the lower frame part.

Opposite side parts of the exterior member 2 in the vehicle width direction are inclined to a vehicle rear side as the parts extend outward in the vehicle width direction (Figure 1). The design surface on the vehicle outer side in the exterior member 2 includes a front surface part 2F, a top surface part 2T, and a bottom surface part 2B. Therefore, in the front surface part 2F of the exterior member 2, a right part 2FR faces forward obliquely to the right, a left part 2FL faces forward obliquely to the left, and an intermediate part 2FI in the vehicle width direction faces forward (front surface). The top surface part 2T of the exterior member 2 extends from a top end portion of the front surface part 2F to a vehicle rear. In the front surface part 2F and top surface part 2T of the exterior member 2, convex parts 2C protruding to the vehicle outer side are formed at boundary positions between the intermediate part and the right part and between the intermediate part and the left part in the vehicle width direction, respectively. In the bottom surface part 2B of the exterior member 2, a portion located midway in the vehicle width direction extends while curving rearward as the portion extends downward.

In the intermediate part 2FI of the front surface part 2F in the exterior member 2, a plate supporting part 21 supporting a license plate P of the vehicle (dashed lines in Figures 1 and 3), a transmission part 22 through which sensing waves (millimeter waves) sent or received by the sensor device S are transmitted, a ventilation part 23 through which air flows in a vehicle interior-exterior direction (vehicle front-rear direction herein), and an extension 24 extending from a periphery of the ventilation part 23 to the vehicle inner side (rear side) and along the periphery are integrally formed. In the present embodiment, the convex parts 2C of the front surface part 2F are provided on the left and right sides of the ventilation part 23, so that rigidity around the ventilation part 23 is increased. In addition, the bottom surface part 2B disposed below the ventilation part 23 and the plate supporting part 21 is formed in a convex shape protruding downward, so that rigidity around the ventilation part 23 and plate supporting part 21 is increased.

The plate supporting part 21 is disposed near a center of a bottom of the exterior member 2 in the vehicle width direction (Figures 1 and 3). The plate supporting part 21 has a substantially rectangular shape corresponding to an outer shape of the license plate P in front view (Figure 3). The license plate P is a plate-shaped member on which information used to identify the vehicle or specify an owner is displayed. For example, the license plate P is called a "vehicle registration number sign" or "vehicle number sign" depending on vehicle classification in Japan and is called a "license plate" in the United States of America, and the like. In an upper portion of the plate supporting part 21, a pair of plate fixing parts 21A for fixing the license plate P are provided at an interval in the vehicle width direction. Additionally, a method of fixing the license plate P to the pair of plate fixing parts 21A will be described later.

In front view, the upper portion of the plate supporting part 21 protrudes to an inner side of the ventilation part 23 formed in a substantially rectangular shape that is longer in the vehicle width direction. In other words, a lower portion of the plate supporting part 21 is formed in a portion of the front surface part 2F of the exterior member 2 that is located on an outer side (lower side) of the ventilation part 23, and the upper portion of the plate supporting part 21 is formed to protrude from the lower portion of the plate supporting part 21 to the inner side (upper side) of the ventilation part 23. Left and right portions of the plate supporting part 21 are connected to a lower portion of the extension 24 along the periphery of the ventilation part 23. The transmission part 22 is disposed on a side opposite to the plate supporting part 21 via the ventilation part 23, that is, above the plate supporting part 21.

The transmission part 22 includes a substantially rectangular transmission surface 22A through which sensing waves (millimeter waves) sent or received by the sensor device S (millimeter wave radar) supported at a predetermined position by the sensor supporting member 3 are transmitted, and a peripheral wall 22B extending from a periphery of the transmission surface 22A in a normal direction of the transmission surface 22A (Figures 1 and 3). A portion of the exterior member 2 that corresponds to the transmission surface 22A is formed in a generally flat plate shape using a material (for example, synthetic resin or the like) having characteristics that allow the transmission of sensing waves. In the present embodiment, the transmission surface 22A is an inclined surface that is slightly inclined rearward as the surface extends downward. That is, the transmission surface 22A of the sensing wave generally faces forward (front surface) although the surface slightly tilts forward downwardly. When the camera (imaging device) is used as the sensor device S in place of the millimeter wave radar, the transmission surface 22A is formed using a substantially transparent material, or a through hole corresponding to an angle of view of the camera is formed on the transmission surface 22A.

In front view, a lower portion of the transmission part 22 protrudes to the inner side of the ventilation part 23. In other words, an upper portion of the transmission part 22 is formed in a portion of the front surface part 2F of the exterior member 2 that is located on the outer side (upper side) of the ventilation part 23, and the lower portion of the transmission part 22 is formed to protrude from the upper portion of the transmission part 22 to the inner side (lower side) of the ventilation part 23.

The peripheral wall 22B of the transmission part 22 extends generally rearward from left and right edges and bottom edge of the periphery of the transmission surface 22A. A right wall section and a left wall section of the peripheral wall 22B are connected to an upper portion of the extension 24 along the periphery of the ventilation part 23. The peripheral wall 22B and the extension 24 are connected in this manner, so that rigidity of a peripheral edge portion of the transmission part 22 in the exterior member 2 is increased.

Furthermore, a bottom wall section in the peripheral wall 22B is connected to a rear portion of a center of a top surface of the plate supporting part 21 in the vehicle width direction (thick line portion of Figure 1). That is, the transmission part 22 in the present embodiment has a bottom end portion directly connected to a top end portion of the plate supporting part 21 and indirectly connected to the plate supporting part 21 via the extension 24 along the periphery of the ventilation part 23. The plate supporting part 21, the transmission part 22 and the extension 24 are connected to one another in this manner, so that rigidity of a peripheral edge portion of the plate supporting part 21 in the exterior member 2 increases.

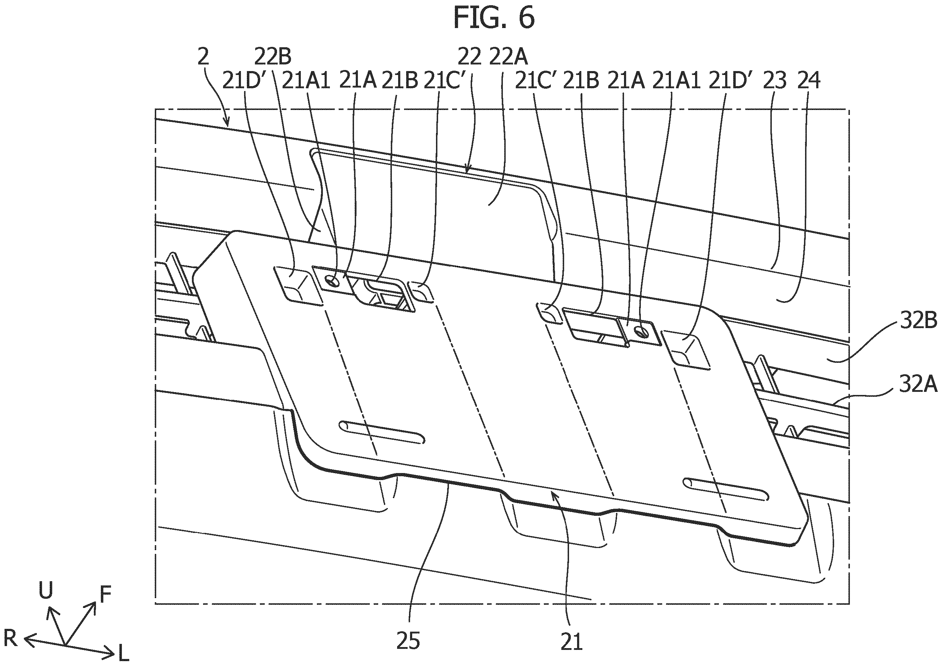

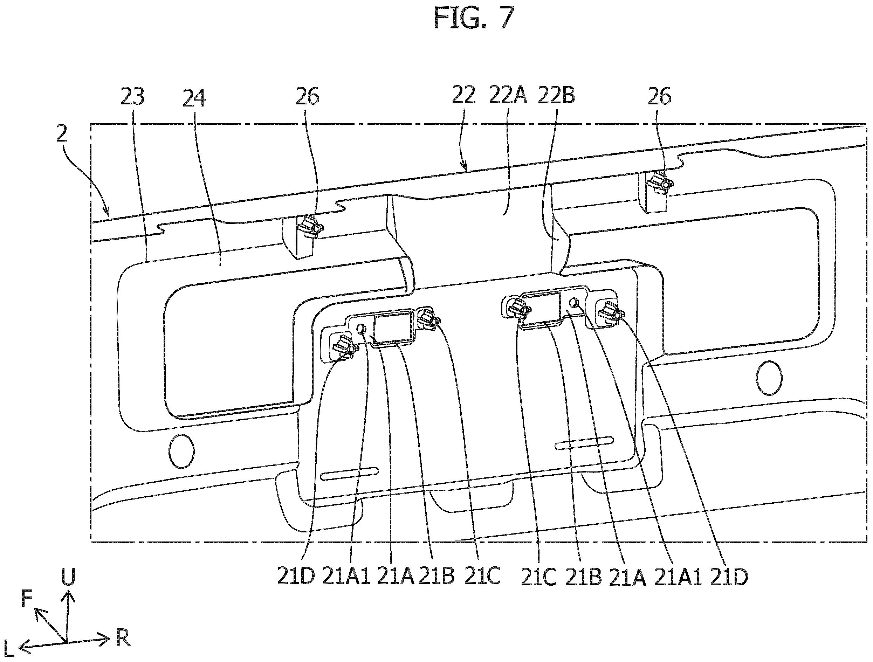

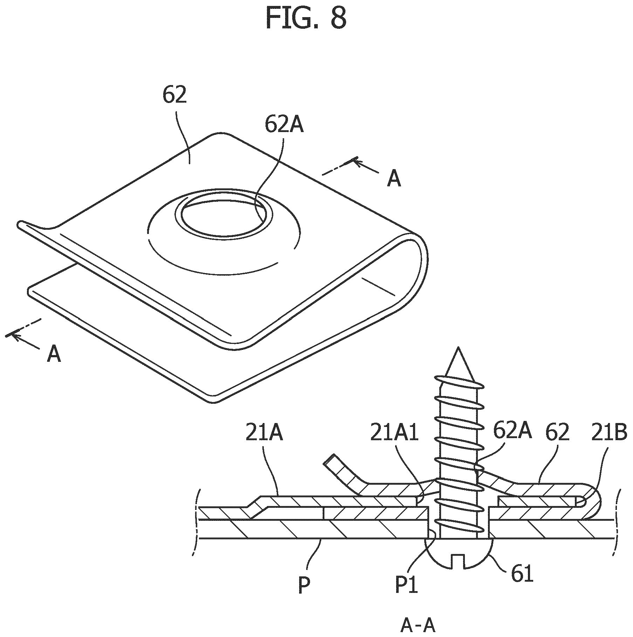

Here, a method of fixing the license plate P to the plate fixing parts 21A of the plate supporting part 21 will be described with reference to Figures 6 to 8. Figure 6 is an enlarged perspective view around the plate supporting part 21 viewed from front and obliquely downward. Figure 7 is an enlarged perspective view around the plate supporting part 21 viewed from rear and obliquely upward. Furthermore, Figure 8 is a view illustrating an example of the method of fixing the license plate P.

As described above, the pair of plate fixing parts 21A for fixing the license plate P are provided in the upper portion of the plate supporting part 21. In the respective plate fixing parts 21A, through holes 21A1, into which screws 61 are inserted, are formed, respectively (Figures 6 and 7, and lower right of Figure 8). On inner sides of the plate fixing parts 21A in the vehicle width direction, rectangular openings 21B for attaching speed nuts 62 (upper left in Figure 8) to the plate fixing parts 21A are formed adjacent to the plate fixing parts 21A, respectively. The speed nuts 62 attached to the plate fixing parts 21A using the openings 21B are used as double-sided washers for fixing the license plate P, respectively (lower right of Figure 8). That is, an operator fits the license plate P from the vehicle outer side (front side) to the plate fixing parts 21A to which the speed nuts 62 are attached and inserts the screws 61 into mounting holes P1 formed in the license plate P and into the through holes 21A1 of the plate supporting part 21 to screw the screws into threaded holes 62A of the speed nuts 62, thereby fixing the license plate P to the plate fixing parts 21A.

In peripheral edges of the plate fixing parts 21A to which the license plate P is fixed as described above, first protrusions 21C and second protrusions 21D are formed, to which first coupling parts 33A and second coupling parts 33B, described later, in the sensor supporting member 3 are coupled, respectively (Figure 7). The first and second protrusions 21C and 21D protrude rearward from a rear surface of the plate supporting part 21 and have tip portions provided with threaded holes, respectively. On a front surface side of the plate supporting part 21, first and second depressions 21C' and 21D' are formed at positions corresponding to the first and second protrusions 21C and 21D (Figure 6). In the present embodiment, each of the first protrusions 21C is disposed on an inner side of each opening 21B in the vehicle width direction corresponding to each plate fixing part 21A, and each of the second protrusions 21D is disposed on an outer side of each plate fixing part 21A in the vehicle width direction. In the plate supporting part 21, the plate fixing parts 21A, and the first and second protrusions 21C and 21D are formed continuously and linked to one another at a close distance, so that rigidity around the first and second protrusions 21C and 21D is increased.

Furthermore, in a portion of the exterior member 2 connected to a bottom end portion of the plate supporting part 21 in the exterior member 2, a concavo-convex shaped portion 25 protruding in the vehicle front-rear direction (thick line in Figure 6) is formed. Since the concavo-convex shaped portion 25 is formed in this manner, a connection area between a body of the exterior member 2 and the plate supporting part 21 is larger, and hence, rigidity around the plate supporting part 21 in the exterior member 2 is increased. Furthermore, each of the first and second protrusions 21C and 21D formed in the plate supporting part 21 is disposed above a border between a convex portion and a concave portion in the concavo-convex shaped portion 25 (a dashed chain line in Figure 6). With this arrangement, support rigidity of the sensor supporting member 3 coupled to the first and second protrusions 21C and 21D via the first and second coupling parts 33A and 33B is increased.

Returning to Figures 1 to 5, the sensor supporting member 3 includes a frame-shaped sensor supporting part 31 supporting the sensor device S, and a partition part 32 that partitions the ventilation area VA formed in the ventilation part 23 of the exterior member 2 into a plurality of small areas. In the present embodiment, the sensor supporting part 31 and the partition part 32 are integrally formed, for example, by injection molding with a resin material. Alternatively, the sensor supporting member 3 may be formed by coupling, to each other, the sensor supporting part 31 and partition part 32 that are formed as separate bodies. The sensor supporting member 3 may be referred to as a net front bumper or the like.

In the sensor supporting member 3, a plurality of coupling parts 33 coupled to the exterior member 2 is formed. In the present embodiment, when the plurality of coupling parts 33 formed in the sensor supporting member 3 is classified according to a coupling location of the exterior member 2, the coupling parts can be roughly classified into the above-described first and second coupling parts 33A and 33B coupled to the plate supporting part 21 of the exterior member 2, third coupling parts 33C coupled to peripheral edges of the transmission part 22 of the exterior member 2, and fourth coupling parts 33D coupled to peripheral edges of the ventilation part 23 of the exterior member 2. The first to fourth coupling parts 33A to 33D will be described later in detail.

The air guide member 5 is disposed on a rear side of the sensor supporting member 3 (Figures 2 to 4). The air guide member 5 includes an air inlet 51 and an outlet 52 and is configured so that air flowing in the ventilation part 23 of the exterior member 2 and the partition part 32 of the sensor supporting member 3 toward the vehicle inner side (rear side) is introduced into the inlet 51, flow of air is narrowed down in the air guide member 5 and air is drawn out of the outlet 52. In the air guide member 5, a plurality of vehicle body fixing parts 53 fixed to the lower cross member 42 of the vehicle body structure member 4 is formed (Figures 2 and 4). That is, the air guide member 5 includes the vehicle body fixing parts 53 fixed to the lower cross member 42 and is accordingly configured to cover, from the rear side, the partition part 32 of the sensor supporting member 3 coupled to the exterior member 2.

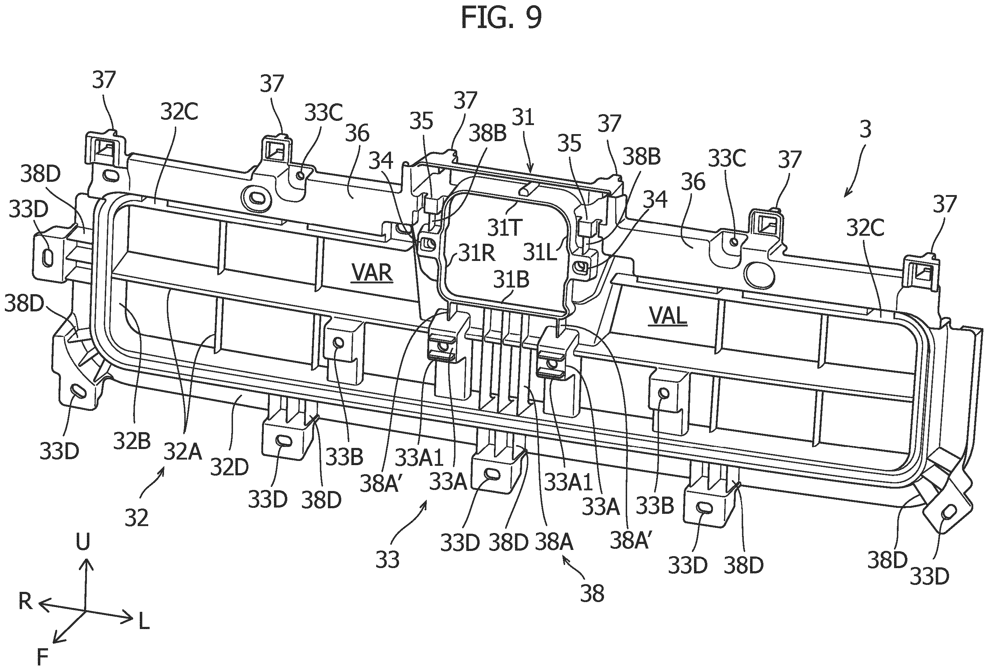

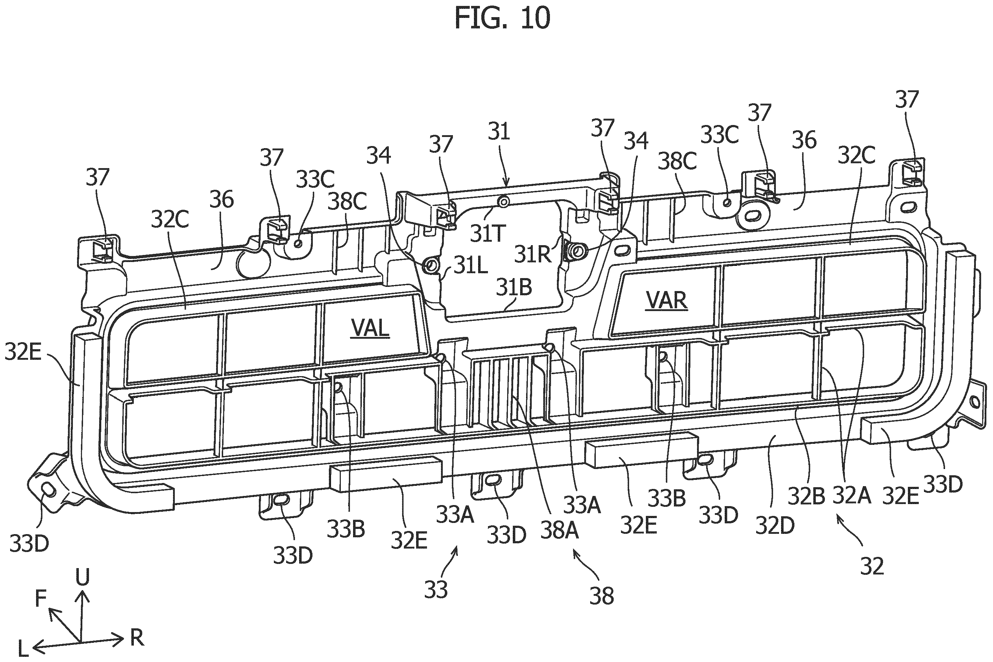

Here, the configuration of each part of the sensor supporting member 3 will be described in detail with reference to Figures 9 and 10. Figure 9 is a perspective view of the sensor supporting member 3 viewed from a front oblique side. Additionally, Figure 10 is a perspective view of the sensor supporting member 3 viewed from a rear oblique side.

The sensor supporting part 31 is formed in a substantially rectangular frame corresponding to an outer shape of the sensor device S mounted to the sensor supporting member 3 (Figures 5, 9 and 10). The sensor supporting part 31 in the present embodiment includes a right wall section 31R to which a right part of the sensor device S is fixed, a left wall section 31L to which a left part of the sensor device S is fixed, a top wall section 31T that links top ends of the right wall section 31R and left wall section 31L, and a bottom wall section 31B that links bottom ends of the right wall section 31R and left wall section 31L (Figures 9 and 10). However, the shape of the sensor supporting part 31 is not limited to the substantially rectangular shape and may be, for example, a frame shape of a substantial U-shape or a circular shape in which either the top, bottom, the left or the right wall section is omitted.

In center portions of the right wall section 31R and the left wall section 31L in an up-down direction, sensor fixing parts 34 protruding forward from front surfaces are provided, respectively. In each sensor fixing part 34, a threaded hole is formed, and the sensor device S is fixed to each sensor fixing part 34 from the vehicle rear side with a screw or the like. In other words, an opening is formed in a portion of the sensor supporting part 31 that is overlapped in the front-rear direction on an outer surface (front surface) of a body of the sensor device S fixed to each sensor fixing part 34. The sensor device S fixed to each sensor fixing part 34 is disposed to oppose the transmission surface 22A of the transmission part 22 of the exterior member 2 via the opening of the sensor supporting part 31 in a state in which the sensor supporting member 3 is coupled to the exterior member 2.

Furthermore, the sensor supporting part 31 is provided with a pair of left and right arm parts 36 extending outward from peripheral edges of the sensor fixing parts 34, respectively, in the vehicle width direction (Figures 9 and 10). Specifically, the right arm part 36 extends to the right from an upper portion of the right wall section 31R in the sensor supporting part 31 as a base end and has a tip portion reaching the vicinity of a right end portion of the partition part 32. The third coupling part 33C coupled to a right portion of the transmission part 22 in the exterior member 2 is formed near a base end portion of a middle of the right arm part 36 in a longitudinal direction. Furthermore, the left arm part 36 extends to the left from an upper portion of the left wall section 31L in the sensor supporting part 31 as a base end and has a tip portion reaching the vicinity of a left end portion of the partition part 32. The third coupling part 33C coupled to a left portion of the transmission part 22 in the exterior member 2 is formed near a base end portion of a middle of the left arm part 36 in the longitudinal direction.

Each of the third coupling parts 33C is formed in a concave shape in which a front surface of each arm part 36 is recessed rearward and is coupled to a tip portion of a third protrusion 26 protruding rearward from a back surface of the exterior member 2 (Figures 4, 5 and 7). In the present embodiment, third protrusions 26 of the exterior member 2 are arranged outside the transmission part 22 in the vehicle width direction and are provided at positions that do not overlap the transmission part 22. This arrangement of the third protrusions 26 reduces degrading of the appearance of the exterior member 2 due to a sink mark or the like generated on a surface of the transmission part 22 on the vehicle outer side (design surface). Furthermore, the third protrusion 26 is connected to the upper portion of the extension 24 along the periphery of the ventilation part 23, and rigidity around the third protrusion 26 is increased.

In an upper portion of each arm part 36 and the top wall section 31T of the sensor supporting part 31, a plurality of cord-like body holding parts 37 holding a cord-like body (not shown) such as a wire harness routed in the vehicle is formed at intervals in the vehicle width direction (Figures 2, 4, 5, 9 and 10). By holding the cord-like body in common to the cord-like body holding parts 37, rigidity of the sensor supporting part 31 and the left and right arm parts 36 is increased.

The partition part 32 includes the partition wall 32A having a lattice shape and serving as a boundary wall between the small areas formed in the ventilation area VA, and a partition frame 32B supporting the partition wall 32A (Figures 1 to 3, 5, 9 and 10). The partition wall 32A in the present embodiment includes one lateral wall extending in the vehicle width direction, and a plurality of vertical walls extending in the up-down direction and arranged at intervals in the vehicle width direction. Longitudinal ends of the lateral and vertical walls of the partition wall 32A are connected to an inner surface of the partition frame 32B, and the lateral and vertical walls are supported at predetermined positions by the partition frame 32B.

The sensor supporting part 31 has a lower portion that protrudes from an upper center portion of the partition part 32 in the vehicle width direction. Consequently, in the partition frame 32B, extending parts 32C extending outward in the vehicle width direction from the right wall section 31R and the left wall section 31L of the sensor supporting part 31, respectively, are formed (Figures 9 and 10). To an outer surface (top surface) of each extending part 32C, a bottom surface of each arm part 36 provided on a sensor supporting part 31 side is connected.

In such a positional relationship between the sensor supporting part 31 and the partition part 32, for the ventilation region VA, a right small area VAR surrounded by a lower portion of the right wall section 31R in the sensor supporting part 31 and by the partition wall 32A and the right extending part 32C in the partition part 32 is formed, and a left small area VAL surrounded by a lower portion of the left wall section 31L in the sensor supporting part 31 and by the partition wall 32A and the left extending part 32C in the partition part 32 is formed. The left and right sensor fixing parts 34 in the sensor supporting part 31 are arranged at positions close to upper inner corner portions of the left and right small areas VAR and VAL in the vehicle width direction, respectively. This arrangement increases rigidity of peripheral edge portions of the left and right sensor fixing parts 34 in the sensor supporting member 3.

The first and second coupling parts 33A and 33B coupled to the plate supporting part 21 of the exterior member 2 are provided in a bottom center of the partition part 32 in the vehicle width direction. In the present embodiment, the first and second coupling parts 33A and 33B on the right are arranged below the right wall section 31R in the sensor supporting part 31, and the first and second coupling parts 33A and 33B on the left are arranged below the left wall section 31L in the sensor supporting part 31. Each first coupling part 33A extends from a lateral wall of the partition wall 32A to the partition frame 32B in the up-down direction. An upper portion of each first coupling part 33A protrudes forward from a forward end portion of the lateral wall and is coupled to the first protrusion 21C in the plate supporting part 21 of the exterior member 2. A convex portion 33A1 protruding forward and extending in the vehicle width direction is provided on a coupling surface of the upper portion of each first coupling part 33A to the exterior member 2. The convex portion 33A1 increases rigidity of the first coupling part 33A while reducing misalignment of the exterior member 2 and the sensor supporting member 3.

The respective second coupling parts 33B are provided at required intervals outside the respective first coupling parts 33A in the vehicle width direction. Each second coupling part 33B also extends from the lateral wall of the partition wall 32A to the partition frame 32B in the up-down direction, and an upper portion of each second coupling part 33B that protrudes forward from the forward end portion of the lateral wall is coupled to the second protrusion 21D in the plate supporting part 21 of the exterior member 2. The first and second coupling parts 33A and 33B are connected to each other via the lateral wall of the partition wall 32A and a bottom part of the partition frame 32B to increase rigidity.

In left and right parts and the bottom part of the partition frame 32B of the partition part 32, fourth coupling parts 33D coupled to a peripheral edge of the ventilation part 23 of the exterior member 2 are provided at required intervals in a direction along an outer periphery of the partition frame 32B. Each fourth coupling part 33D extends from the partition frame 32B to a side opposite to the partition wall 32A (direction away from the ventilation area VA) and has a forward protruding convex portion coupled to around the ventilation part 23 of the exterior member 2. In addition, on a rear surface side of the left and right parts and bottom part in the partition frame 32B, a flange part 32D protruding on the opposite side to the partition wall 32A and extending along the outer periphery of the partition frame 32B is formed. The flange part 32D links adjacent fourth coupling parts 33D to each other. Each fourth coupling part 33D may be provided with a location that holds a cord-like body such as a wire harness.

On a rear surface of the flange part 32D of the partition frame 32B described above, cushion materials 32E at a plurality of places are provided (Figures 5 and 10). Each cushion material 32E is disposed at a position that abuts on a peripheral portion of the air inlet 51 in the air guide member 5 fixed to the lower cross member 42. Each cushion material 32E has a function of absorbing and reducing a load acting on the partition part 32 from the air guide member 5.

Furthermore, around the plurality of coupling parts 33 coupled to the exterior member 2 in the sensor supporting member 3, a plurality of vertical plate sections 38 extending in a direction intersecting the vehicle front-rear direction (mainly in the vehicle up-down direction in the present embodiment) is provided (Figures 5, 9 and 10).

Specifically, a vertical plate section 38A provided around the first coupling part 33A includes three vertical plates arranged below the sensor supporting part 31 and between the left first coupling part 33A and the right first coupling part 33A. The respective vertical plates of the vertical plate section 38A have a predetermined width in the vehicle front-rear direction, extend in the up-down direction, and are arranged at intervals in the vehicle width direction. A top end portion of each vertical plate is connected to the bottom wall section 31B of the sensor supporting part 31, and a bottom end portion of each vertical plate is connected to a bottom inner surface of the partition frame 32B. In the present embodiment, when the sensor supporting member 3 is viewed from a vehicle front side (Figure 9), the top end portion of each vertical plate of the vertical plate section 38A penetrates the lateral wall of the partition wall 32A and extends to a bottom edge portion of the opening formed in the center of the sensor supporting part 31. Furthermore, in addition to the three vertical plates of the vertical plate section 38A, a vertical plate section 38A' is provided and includes a vertical plate disposed between a top surface of each of left and right first coupling parts 33A and the bottom edge portion of the opening of the sensor supporting part 31. The vertical plate sections 38A and 38A' of five vertical plates in total increase rigidity of peripheral edge portions of the sensor supporting part 31 and the first coupling parts 33A.

A vertical plate section 38C provided around the third coupling parts 33C includes three vertical plates arranged between the right wall section 31R of the sensor supporting part 31 and the right third coupling part 33C, and three vertical plates arranged between the left wall section 31L of the sensor supporting part 31 and the left third coupling part 33C (Figure 10). The respective vertical plates of the vertical plate section 38C protrude rearward from back surfaces of the left and right arm parts 36, extend in the up-down direction and are arranged at intervals in the vehicle width direction.

A vertical plate section 38D provided around each fourth coupling part 33D includes three vertical plates arranged between the partition frame 32B and each fourth coupling part 33D (Figure 9). Each vertical plate of the vertical plate section 38D protrudes forward from a front surface of the flange part 32D of the partition frame 32B, extends in a direction substantially perpendicular to an outer peripheral surface of the partition frame 32B and are arranged at intervals in the direction along the outer periphery of the partition frame 32B.

The plurality of vertical plate sections 38A, 38C and 38D are provided in the sensor supporting member 3 as described above, so that rigidity of a peripheral edge portion of the first, third and fourth coupling parts 33A, 33C, and 33D in the sensor supporting member 3 is increased. In the present embodiment, in addition to the vertical plate sections 38A, 38C, and 38D, a vertical plate section 38B is also provided around the left and right sensor fixing parts 34 in the sensor supporting part 31 (Figure 9). The vertical plate section 38B includes a vertical plate disposed between each sensor fixing part 34 and a convex shape part 35 formed above each sensor fixing part. Each vertical plate of the vertical plate section 38B protrudes forward from a front surface of each of the right wall section 31R and the left wall section 31L in the sensor supporting part 31 and extends in the up-down direction. The vertical plate section 38B is provided in this manner, so that rigidity of peripheral edge portions of the sensor fixing parts 34 is also increased.

In assembling respective members in the vehicle structure 1 of the present embodiment described above, first, the sensor device S is fixed to each sensor fixing part 34 of the sensor supporting part 31 in the sensor supporting member 3 with screws or the like. For the sensor supporting member 3 to which the sensor device S is fixed, the first and second coupling parts 33A and 33B are then coupled to the plate supporting part 21 (first and second protrusions 21C and 21D) of the exterior member 2, the third coupling parts 33C are coupled to peripheral edges (third protrusions 26) of the transmission part 22 of the exterior member 2, and the fourth coupling parts 33D are coupled to peripheral edges of the ventilation part 23 of the exterior member 2. Thus, the sensor device S supported on the sensor supporting member 3 is disposed opposing the transmission surface 22A of the transmission part 22 in the exterior member 2.

The exterior member 2 to which the sensor supporting member 3 is coupled is fixed to the lower cross member 42 of the vehicle body structure member 4 together with the air guide member 5. Therefore, in the present embodiment, the sensor supporting member 3 is indirectly coupled to the vehicle body structure member 4 via the exterior member 2. The air guide member 5 fixed to the lower cross member 42 is disposed to cover the partition part 32 of the sensor supporting member 3 from the rear side. At this time, the peripheral portion of the inlet 51 of the air guide member 5 abuts on the cushion material 32E provided on the rear surface of the flange part 32D in the partition part 32. On fixing the exterior member 2 and the air guide member 5 to the vehicle body structure member 4, the license plate P is fixed to the plate fixing parts 21A in the plate supporting part 21 of the exterior member 2.

As described above, in the vehicle structure 1 of the present embodiment, the sensor supporting member 3 supporting the sensor device S is coupled to the plate supporting part 21 supporting the license plate P in the exterior member 2. The plate supporting part 21, to which the license plate P is mounted, increases the rigidity. Consequently, even if vibration, air pressure, an external force in a light collision, or the like during running of the vehicle acts on the exterior member 2, displacement of the sensor device S disposed on a vehicle inner side (rear side) of the exterior member 2 via the sensor supporting member 3 coupled to the plate supporting part 21 can be reduced. This can maintain detection accuracy of the sensor device S at a desired level. In particular, the sensor supporting member 3 is coupled to the peripheral edges of the plate fixing parts 21A to which the license plate P is fixed, to further increase rigidity around such coupling places, and hence, the displacement of the sensor device S can be effectively reduced.

Furthermore, in the vehicle structure 1 of the present embodiment, the exterior member 2 includes the transmission part 22 through which sensing waves sent or received by the sensor device S are transmitted, and the transmission part 22 of the exterior member 2 is connected to the plate supporting part 21. The plate supporting part 21, to which the license plate P is mounted and the transmission part 22 is connected, further increases the rigidity, so that the displacement of the sensor device S can be more effectively reduced. In particular, the transmission part 22 is connected to the plate supporting part 21 via the extension 24 along the periphery of the ventilation part 23, while the transmission part 22 is disposed on the side opposite to the plate supporting part 21 via the ventilation part 23, and the lower portion of the transmission part 22 protrudes to the inner side of the ventilation part 23 and is connected to the plate supporting part 21. Then, the rigidity around the plate supporting part 21 and the transmission part 22 further increases, so that the displacement of the sensor device S can be further effectively reduced.

Additionally, in the vehicle structure 1 of the present embodiment, the sensor supporting member 3 is coupled to the peripheral edge of the transmission part 22 as well as the plate supporting part 21 in the exterior member 2. The sensor supporting member 3 is coupled not only to the plate supporting part 21 of the exterior member 2, but also to the peripheral edge of the transmission part 22, which can increase the rigidity of a peripheral edge portion of the sensor supporting part 31 in the sensor supporting member 3. This can accurately and easily maintain the relative positional relationship between the sensor device S and the transmission part 22 of the exterior member 2 while reliably reducing the displacement of the sensor device S.

Furthermore, in the vehicle structure 1 of the present embodiment, the sensor supporting member 3 includes the frame-shaped sensor supporting part 31 supporting the sensor device S, and the first coupling parts 33A arranged in a peripheral edge of the sensor supporting part 31 and coupled to the plate supporting part 21 of the exterior member 2. Since the first coupling parts 33A are arranged in this manner, the peripheral edge portion of the sensor supporting part 31 in the sensor supporting member 3 is coupled to the plate supporting part 21 of the exterior member 2, and this can further increase the rigidity of the peripheral edge portion of the sensor supporting part 31.

Additionally, in the vehicle structure 1 of the present embodiment, the sensor supporting member 3 includes the second coupling parts 33B arranged at intervals outside the first coupling parts 33A in the vehicle width direction and coupled to the plate supporting part 21 of the exterior member 2. By providing the second coupling parts 33B in this manner, the sensor supporting member 3 is coupled to the plate supporting part 21 of the exterior member 2 even outside in the vehicle width direction around the sensor supporting part 31, so that the rigidity of the peripheral edge portion of the sensor supporting part 31 can be further increased. In particular, when the sensor supporting member 3 is coupled to the plate supporting part 21 of the exterior member 2 so that the plate fixing part fixing the license plate P in the exterior member 2 is disposed between the first coupling part 33A and the second coupling part 33B, the first and second coupling parts 33A and 33B can reinforce opposite side portions of the plate fixing part 21A in the plate supporting part 21, which can further increase the rigidity around the sensor supporting part 31.

In the above, the embodiment of the present invention has been described, but the present invention is not limited to the above-described embodiment, and various modifications and changes are possible based on the technical concept of the present invention.

For example, in the above-described embodiment, a structure has been described in which the top end portion of the plate supporting part 21 and the bottom end portion of the transmission part 22 in the exterior member 2 are directly connected, and alternatively, the plate supporting part 21 and the transmission part 22 may be formed apart. Furthermore, an example has been described in which the transmission part 22 is disposed on the upper side of the plate supporting part 21, and alternatively, the transmission part 22 may be disposed on the lower side of the plate supporting part 21, or the plate supporting part 21 and the transmission part 22 may be arranged side by side on the left and right.

Furthermore, in the above-described embodiment, an example has been described in which the plate supporting part 21 and the transmission part 22 are integrally formed in the exterior member 2 (front bumper), and even with a structure in which a plate supporting member and/or the transmission part 22 formed separately from the exterior member 2 is removably fixed to the exterior member, operations and effects similar to those of the above-described embodiment can be obtained.

Additionally, in the above-described embodiment, an example has been described in which the transmission part 22 is formed in the intermediate part 2FI facing forward (front surface) in the front surface part 2F of the exterior member 2, and sensing waves sent or received by the sensor device S supported on the sensor supporting member 3 are propagated in the vehicle front-rear direction via the transmission part 22. However, in addition to the intermediate part 2FI of the front surface part 2F, the transmission part 22 may be formed in the right part 2FR or the left part 2FL of the front surface part 2F, or the bottom surface part 2B or the top surface part 2T of the exterior member 2 so that the sensor device S is supported on the vehicle inner side of the transmission part 22. For example, when the transmission part 22 is formed in the right part 2FR in the front surface part 2F of the exterior member 2, sensing waves sent from the sensor device S are transmitted through the transmission part 22 and propagated forward and obliquely toward the right. In this case, another vehicle running in a lane on the right of a lane in which the vehicle is itself running, or the like can be detected by the sensor device S. Such a modification related to the arrangement of the transmission part 22 and the sensor device S for the front bumper can be similarly applied to an exterior member other than the front bumper (for example, front grille, rear bumper, rear grille, or the like).

### [Reference Signs List]

1 Vehicle structure
2 Exterior member
21 Plate supporting part
21A Plate fixing part
21B Opening
21C, 21D, 26 First to third protrusions
22 Transmission part
22A Transmission surface
22B Peripheral wall
23 Ventilation part
24 Extension
25 Concavo-convex shaped portion
2B Bottom surface part (design surface)
2F Front surface part (design surface)
2T Top surface part (design surface)
3 Sensor supporting member
31 Sensor supporting part
31L Left wall section
31R Right wall section
32 Partition part
32A Partition wall
32B Partition frame
32C Extending part
33, 33A to 33D, First to fourth coupling parts
34 Sensor fixing part
35 Convex shape part
36 Arm part
37 Cord-like body holding part
38A to 38D Vertical plate sections
4 Vehicle body structure member
41 Front side member
42 Lower cross member
43 Upper cross member
44 Bottom frame part of grille supporting member
5 Air guide member
P License plate
S Sensor device
VA Ventilation area

## Claims

1. A vehicle structure comprising:
an exterior member forming a design surface on a vehicle outer side, and
a sensor supporting member provided on a vehicle inner side of the exterior member and supporting a sensor device that senses a vehicle external environment,
**characterized in that** the exterior member includes a plate supporting part supporting a license plate of the vehicle, and
the sensor supporting member is coupled to the plate supporting part.

2. The vehicle structure according to claim 1, wherein the plate supporting part includes a plate fixing part to which the license plate is fixed, and
the sensor supporting member is coupled to a peripheral edge of the plate fixing part.

3. The vehicle structure according to claim 1, wherein the exterior member includes a transmission part through which sensing waves sent or received by the sensor device are transmitted, and
the transmission part is connected to the plate supporting part.

4. The vehicle structure according to claim 3, wherein the exterior member includes:
a ventilation part through which air flows in a vehicle interior-exterior direction, and
an extension extending from a periphery of the ventilation part to the vehicle inner side and extending along the periphery, and
the transmission part is connected to the plate supporting part via the extension.

5. The vehicle structure according to claim 3, wherein the exterior member includes a ventilation part through which air flows in a vehicle interior-exterior direction, and
the transmission part is disposed on a side opposite to the plate supporting part via the ventilation part, and at least a portion of the transmission part protrudes to an inner side of the ventilation part and is connected to the plate supporting part.

6. The vehicle structure according to claim 1, wherein the exterior member includes a transmission part through which sensing waves sent or received by the sensor device are transmitted, and
the sensor supporting member is coupled to a peripheral edge of the transmission part as well as the plate supporting part.

7. The vehicle structure according to claim 6, wherein the sensor supporting member includes:
a frame-shaped sensor supporting part supporting the sensor device, and
a first coupling part disposed in a peripheral edge of the sensor supporting part and coupled to the plate supporting part of the exterior member.

8. The vehicle structure according to claim 7, wherein the sensor supporting member includes a second coupling part disposed at an interval outside the first coupling part in the vehicle width direction and coupled to the plate supporting part of the exterior member.

9. The vehicle structure according to claim 8, wherein the plate supporting part includes a plate fixing part to which the license plate is fixed, and the sensor supporting member is coupled to the plate supporting part so that the plate fixing part is disposed between the first coupling part and the second coupling part.

10. The vehicle structure according to claim 6, wherein the plate supporting part includes a plate fixing part to which the license plate is fixed, and
the sensor supporting member is coupled to the plate supporting part around the plate fixing part.
